# EUROPEAN PATENT SPECIFICATION

(11) **EP 1 990 221 B1**
(45) Date of publication and mention of the grant of the patent: **15.07.2009**
(21) Application number: 07425274.3
(22) Date of filing: 10.05.2007
(51) Int. Cl.: B60H 1/00, B60H 1/32

(54) **Air-conditioning system for a motor vehicle, and motor vehicle equipped with the system**
Klimaanlagensystem für ein Kraftfahrzeug und mit dem System ausgestattetes Kraftfahrzeug
Système de conditionnement d'air pour véhicule à moteur, véhicule à moteur équipé du système

(43) Date of publication of application: 12.11.2008
(73) Proprietor: C.R.F. SOCIETÀ CONSORTILE PER AZIONI, 10043 Orbassano (IT)
(72) Inventor: Mola, Stefano c/o C.R.F. Societa' Consortile per Azioni, 10043 Orbassano (IT); Malvicino, Carloandrea c/o C.R.F. Societa' Consortile per Azioni, 10043 Orbassano (IT)
(74) Representative: Bergadano, Mirko

(56) References cited:
- EP-A2- 1 151 878
- WO-A-20/05071328
- DE-A1-7102004 003 78
- FR-A- 2 889 504
- US-A1- 2003 046 945

## Description

The present invention relates in general to an air-conditioning system for a motor vehicle, and to a motor vehicle equipped with the system.

More in particular, the present invention relates to an air-conditioning system for a passenger motor vehicle, to which the following description will refer without any loss of generality.

In the field of passenger motor vehicles, it is known to provide an air-conditioning system comprising a heating circuit, which is designed to supply a heating fluid to at least one heat exchanger provided with a fan for sending a flow of hot air into the motor vehicle, and a cooling circuit designed to supply a coolant to the heat exchanger in order to send a flow of cold air into the motor vehicle.

Generally, the heating circuit extends through the motor-vehicle internal-combustion engine, and is flown by an engine coolant. The heating fluid to be supplied to the heat exchanger for heating the motor vehicle is hence obtained using part of the coolant coming out of the motor-vehicle engine before it enters the usual radiator. The cooling circuit comprises in succession: a compressor, a condenser, an expansion valve, and an evaporator.

In known air-conditioning systems for motor vehicles, the coolant currently used has in general a very high global warming potential (GWP). In order to reduce the greenhouse effect, a standard issued by the European Community prescribes there should not be a yearly loss of said coolant into the environment that exceeds a given threshold. Furthermore, starting from 2011, coolants that present a GWP higher than 150 must no longer be used.

It has been proposed to use as coolant carbon dioxide (CO₂), which has a minimal global warming potential. This fluid, when used as cooling gas, presents very high operating pressures (30-140 bar). Said fluid consequently requires pipes and corresponding gaskets that are capable of withstanding said pressures.

It has also been proposed to use as coolant 1.1-difluoro methane gas, known as R152a, which has a global warming potential that falls within the limits of the aforementioned standard, but is, however, relatively inflammable.

In known air-conditioning systems, in general the condenser is placed in front of the radiator, on the front part of the motor vehicle, so as to be impinged upon by the external air. In turn, the compressor is housed in the engine compartment and is normally driven by the shaft of the motor-vehicle engine, via a drive belt. Finally, the evaporator is housed in the passenger compartment, for example underneath the dashboard, behind the usual firewall that separates the engine compartment from the passenger compartment. Housed in the engine compartment is also an internal heat exchanger connected by means of a first circulation circuit to the condenser, and by means of a second circulation circuit to the evaporator. This exchanger is rendered necessary in particular in the case of CO₂ systems to increase the efficiency thereof.

EP 1 151 878 discloses an air-conditioning system upon which the preamble of appending claim 1 is based.

Known air-conditioning systems described above present certain drawbacks. In the first place, the various components listed above require corresponding fixing means, so that installation of the system becomes complicated and costly. In addition, the pipes necessary for the two circuits are excessively long, are subject to high levels of heat dispersions and require a high charge of coolant. Finally, said pipes and the corresponding gaskets render the use of known coolants with low global warming potential problematical.

In fact, in the case of CO₂, the longer the pipes and the greater the number of connections, the higher the likelihood of losses and the cost of the system. Furthermore, the pipes represent one of the components with highest cost and most difficult to produce. In the case of the R152a gas, the greater the number of connections, the higher the possibility of a leakage of a potentially inflammable substance occurring.

The aim of the present invention is to provide an air-conditioning system for a motor vehicle that is free from the drawbacks described above and that enables coolants with low GWP to be used.

According to the present invention, the above aim is achieved by an air-conditioning system for a motor vehicle, as defined in Claim 1.

For a better understanding of the invention an embodiment will now be described by way of non-limiting example, with reference to the annexed plates of drawings, wherein:
- Figure 1 schematically shows a motor vehicle equipped with an air-conditioning system according to the invention;
- Figure 2 is a schematically shows an enbloc assembly of the system of Figure 1; and
- Figure 3 is a variant of the enbloc assembly of Figure 2.

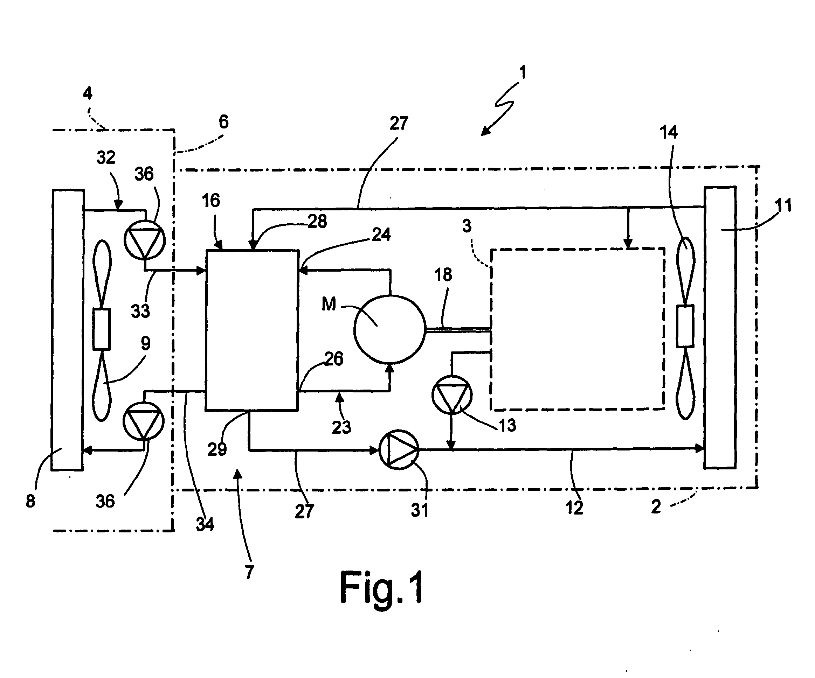

With reference to Figure 1, the reference number 1 designates as a whole a passenger motor vehicle, preferably an automobile, which comprises an engine compartment 2, represented with dashed and dotted lines, in which the usual vehicle engine 3, schematically represented with dashed lines is installed. The motor vehicle 1 also comprises a passenger compartment 4, also represented only partially with dashed and dotted lines. The passenger compartment 4 is separated from the engine compartment 2 by a so-called "firewall" 6, represented with dashed and double dotted lines.

The motor vehicle 1 is equipped with an air-conditioning system, designated as a whole by 7, which comprises a heat exchanger 8 for exchanging heat between the air in the passenger compartment and an intermediate fluid, for example a mixture of water and glycol. The heat exchanger 8 is preferably set in the passenger compartment 4, for example underneath the dashboard, and comprises a fan 9, which sends selectively the air taken from the outside or the air present in the passenger compartment 4 to the heat exchanger 8.

The air-conditioning system 7 further comprises another heat exchanger for exchanging heat between the external air and an intermediate fluid, which can be the same as that of the exchanger heat 8. In particular, this further heat exchanger can be constituted by the usual radiator 11 for cooling the engine 3, which is set in the front part of the compartment 2 of the engine 3. The radiator 11 comprises a hydraulic circuit 12, which receives the mixture that has cooled the engine 3 and, by means of a circulation pump 13, sends it to the radiator 11. The external air passes through the radiator 11 by means of another fan 14.

The air-conditioning system 7 further comprises refrigeration means, designated as a whole by 16, wherein a coolant performs a cycle of refrigeration for enabling a heat exchange between the intermediate fluid of the exchanger 8 and the intermediate fluid of the radiator 11. The refrigeration cycle is controlled by means of a compressor 17 for compressing the coolant. The compressor 17 is also located in the compartment 2 of the engine 3 and is actuated by a shaft 18 driven by the engine 3, via motion-transmission means, not shown in Figure 1.

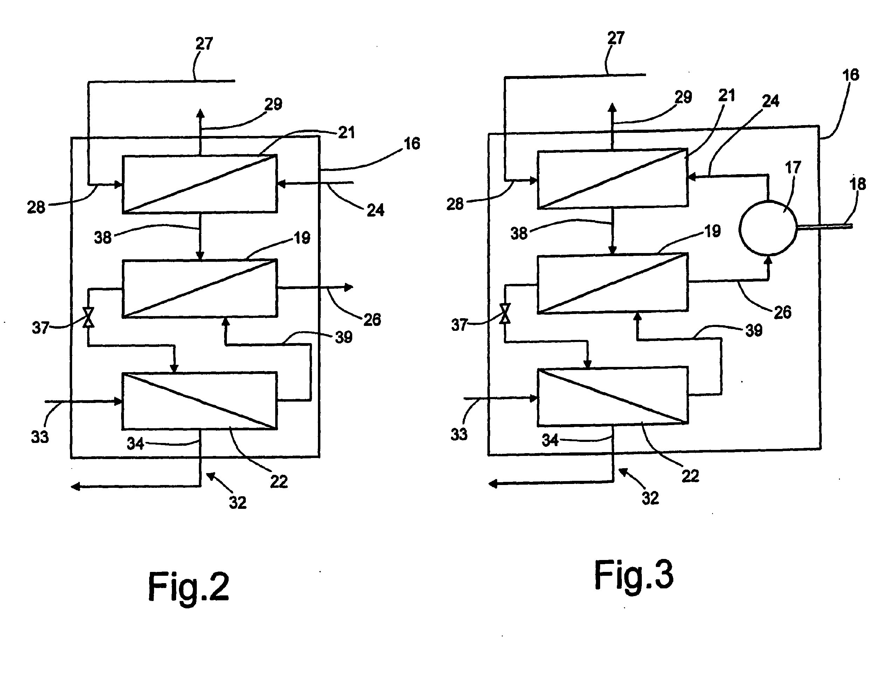

As will be seen more clearly hereinafter, the refrigeration means 16 comprise an internal heat exchanger 19 (Figure 2), a condenser 21, and an evaporator 22. In the condenser 21, the coolant yields heat to the intermediate fluid of the radiator 11, whilst in the evaporator 22 the coolant subtracts heat from the intermediate fluid of the heat exchanger 8. Finally, the air-conditioning system 7 comprises means, in themselves known, for controlling the humidity of the air in the passenger compartment, and valve devices (not indicated), which enable adjustment of the temperature of the passenger compartment 4 under the control of manual-regulation means and of a thermostat.

According to the invention, the air-conditioning means 16 are integrated so as to form an enbloc assembly, referred to hereinafter simply as "enbloc", which is designated in the drawings with the same number 16, and is designed to be housed in the compartment 2 of the engine 3. In particular, integrated in the enbloc 16 are at least the internal heat exchanger 19, the condenser 21, and the evaporator 22.

The enbloc 16 further comprises a cooling circuit 23 (see also Figure 1), which is designed to cause circulation of a coolant between the enbloc 16 and the compressor 17. Advantageously, it is possible to use as coolant the CO₂ gas, so that the pipes of the circuit 23 must be suitable for supporting the necessary pressure required by said gas. Alternatively, the liquid R152a can be used as coolant, so that the pipes must be well isolated and suitable for preventing any leakage of liquid through the gasket.

The circuit 23 has an inlet 24 in the enbloc for inlet of the coolant compressed by the compressor 17, and an outlet 26 for return of the fluid to the compressor 17. In particular, the inlet 24 introduces the compressed fluid into the condenser 21, whilst, through the outlet 26, the fluid from the internal heat exchanger 19 returns to the compressor 17.

The condenser 21 is in communication with the radiator 11, through a heating circuit 27, which has an inlet 28 for receiving the mixture of water and glycol coming from the radiator 11, and an outlet 29 for sending the mixture to the radiator 11, through a pump 31. The evaporator 22 is in communication with the heat exchanger 8 through a cooling circuit 32, which has an inlet 33 for receiving the mixture of water and glycol coming from the heat exchanger 8, through another pump 36, and an outlet 34 for conveying the mixture back to the internal heat exchanger 19.

In addition, the internal heat exchanger 19 is connected to the evaporator 22 through an expansion valve 37, designed to receive the coolant in liquid phase from the internal heat exchanger 19 and to send the coolant in the gas phase to the evaporator 22. Finally, the condenser 21 is connected to the internal heat exchanger 19 by means of a conduit 38, whilst the evaporator 22 is connected to said heat exchanger 19 by means of another conduit 39.

Operation of the air-conditioning system 7 is described in what follows.

In use, the coolant is compressed by the compressor 17 and brought, once again in the gas phase, up to a higher level of pressure. Through the inlet 24 of the circuit 23, said fluid in liquid phase enters the condenser 21, where the mixture of water and glycol coming from the radiator 11 circulates. The coolant hence yields heat to the mixture, and is consequently cooled, whilst, through the outlet 26 and the pump 31, the mixture returns into the radiator 11, together with the mixture for cooling the engine 3.

The coolant thus cooled, through the conduit 38 now passes into the internal heat exchanger 19, from which, through the expansion valve 37, passes to the lower pressure level and reaches the evaporator 22, where in the two-phase state it is heated. Through the outlet 34 from the evaporator 22, the mixture of water and glycol is sent to the heat exchanger 8, where it absorbs the heat of the air of the passenger compartment 4. Through the inlet 33 of the circuit 32, the pump 36 causes circulation of the mixture thus heated from the heat exchanger 8 to the evaporator 22. The coolant now cools the mixture coming from the heat exchanger 8 and, through the outlet 34, returns into the heat exchanger 8.

In the evaporator 22, the coolant is partially heated and, through the conduit 39 now enters the internal heat exchanger 19, where heat exchange takes place with the coolant entering through the conduit 38. In the internal heat exchanger 19, the coolant coming from the condenser 21 cools before entering the evaporator 22, whilst the coolant coming from the evaporator 22 is heated and, through the outlet 26, returns to the compressor 17.

According to the variant of Figure 3, the enbloc assembly 16 also includes the compressor 17, in such a way that the only link with the outer environment is constituted by the pipes containing the intermediate fluids, i.e., the mixtures of water and glycol, and by a mechanical coupling between the compressor and the engine. For the rest, operation of the system according to the variant of Figure 3 is identical to that of Figures 1 and 2.

From what has been seen above the advantages of the air-conditioning system of the invention as compared to the known art are evident. In the first place, the enbloc 16 facilitates enormously installation of the system on the motor vehicle. In addition, the pipes of the various circuits for circulation of the fluids between the components of the enbloc are of limited length. Consequently, on the one hand a limited amount of coolant is necessary for operation of the system, whilst on the other the risks due to the high pressures of the CO₂ gas, or to the inflammability of the R152a fluid is reduced.

In addition, since the coolant is contained exclusively in the circuit 23 of the internal heat exchanger 19, it does not need to be supplied to the exchanger 8 of the passenger compartment 4. The heat exchanger 8 may also easily undergo cleaning treatments, whilst the presence of the circuits 23, 27 and 32 separate from one another simplifies any possible maintenance interventions, enabling in the event of failure or wear simple replacement only of the circuit affected. Finally, in the variant of Figure 3, the integration of the compressor 17 in the enbloc 16 further reduces the adiabatic losses of the heat exchangers and the risk of the coolant escaping.

It is evident that various modifications and improvements can be made to the system described, without thereby departing from the annexed claims. For example, the coolant, and one or both of the intermediate fluids, can be varied. In addition, more than one heat exchanger can be envisaged for the passenger compartment, and the number of pumps for circulation of the various fluids can be varied. In turn, the exchanger 11 for exchanging heat with the external air can be distinct from the radiator of the engine 3 and be set adjacent to the enbloc 16. Finally, location of the enbloc 16 in the engine compartment 2 can be varied.

## Claims

1. An air-conditioning system (7) for a motor vehicle having a passenger compartment (4) and an engine compartment (2), the air-conditioning system (7) comprising at least a first heat exchanger (11) for exchanging heat between external air and a first intermediate fluid, and at least a second heat exchanger (8) for exchanging heat between air within said passenger compartment (4) and a second intermediate fluid; said air-conditioning system (7) further comprising a condenser (21) wherein a coolant yields heat to said first intermediate fluid, an evaporator (22) wherein said coolant subtracts heat from said second intermediate fluid, and an internal heat exchanger (19), designed to enable heat exchange between the coolant coming out from said evaporator (22) and the fluid coming out from said condenser (21); said air-conditioning system (7) being **characterized in that** at least said condenser (21), said evaporator (22), and said internal heat exchanger (19) are integrated so as to form an enbloc assembly (16) designed to be housed in said engine compartment (2).

2. The air-conditioning system according to Claim 1, **characterized in that** said coolant is kept in circulation between said condenser (21), said evaporator (22), and said internal heat exchanger (19), by means of a compressor (17), which is also housed in said engine compartment (2).

3. The air-conditioning system according to Claim 2, **characterized in that** said compressor (17) is operated by an engine (3) of the motor vehicle via motion transmission means.

4. The air-conditioning system according to Claim 3, **characterized in that** said compressor (17) is integrated within said enbloc assembly.

5. The air-conditioning system according to any one of Claims 2 to 4, **characterized in that** an expansion valve (37) is arranged between said internal heat exchanger (19) and said evaporator (22) to favour evaporation of said coolant.

6. The air-conditioning system according to Claim 5, **characterized in that** each of said heat exchangers (8, 11) comprises a corresponding circuit (27, 32) for circulating the corresponding intermediate fluid, each of said circulation circuits (27, 32) comprising a corresponding circulation pump (31, 36).

7. The air-conditioning system according to Claim 6, **characterized in that** said internal heat exchanger (19) is part of a cooling circuit (23) comprising said compressor (17), said condenser (21), an expansion valve (37), and said evaporator (22), which are arranged in succession in said cooling circuit (23).

8. The air-conditioning system according to Claim 6 or Claim 7, **characterized in that** each of said intermediate fluids is a mixture of water and glycol.

9. The air-conditioning system according to Claim 6 or Claim 7, **characterized in that** said intermediate fluids are the same as one another.

10. The air-conditioning system according to any one of the preceding claims, **characterized in that** said coolant is a fluid with low global warming potential.

11. The air-conditioning system according to Claim 10, **characterized in that** said coolant is constituted by carbon dioxide or by a liquid, for example R152a gas.

12. The air-conditioning system according to any one of the preceding claims, **characterized in that** it comprises a fan (9, 14) associated to each of said heat exchangers (8, 11) for circulation of the air through the associated heat exchanger (8, 11).

13. A motor vehicle comprising an air-conditioning system according to any one of the preceding claims.

## Patentansprüche

1. Klimaanlagensystem (7) für ein Kraftfahrzeug mit einer Fahrgastzelle (4) und einem Motorraum (2), wobei das Klimaanlagensystem (7) aufweist wenigstens einen ersten Wärmetauscher (11) zum Austausch von Wärme zwischen der Außenluft und einem ersten Zwischenfluid und wenigstens einen zweiten Wärmetauscher (8) zum Austausch von Wärme zwischen Luft innerhalb der Fahrgastzelle (4) und einem zweiten Zwischenfluid; wobei das Klimaanlagensystem (7) ferner aufweist einen Kondensator (21), in welchem ein Kühlmittel Wärme an das erste Zwischenfluid liefert, einen Verdampfer (22), in welchem das Kühlmittel Wärme aus dem zweiten Zwischenfluid abzieht, und einen inneren Wärmetauscher (19), der so ausgebildet ist, dass dieser einen Wärmeaustausch zwischen dem aus dem Verdampfer (22) kommenden Kühlmittel und dem aus dem Kondensator (21) kommenden Fluid ermöglicht; wobei das Klimaanlagensystem (7) **dadurch gekennzeichnet ist, dass** wenigstens der Kondensator (21), der Verdampfer (22) und der innere Wärmetauscher (19) so integriert sind, dass sie eine geschlossene Einheit (16) bilden, die so ausgebildet ist, dass sie in dem Motorraum (2) aufgenommen werden kann.

2. Klimaanlagensystem nach Anspruch 1, **dadurch gekennzeichnet, dass** das Kühlmittel zwischen dem Kondensator (21), dem Verdampfer (22) und dem inneren Wärmetauscher (19) mithilfe eines Kompressors (17), der ebenfalls in dem Motorraum (2) aufgenommen ist, in Zirkulation gehalten wird.

3. Klimaanlagensystem nach Anspruch 2, **dadurch gekennzeichnet, dass** der Kompressor (17) durch einen Motor (3) des Kraftfahrzeugs über eine Bewegungstransmissionseinrichtung betrieben wird.

4. Klimaanlagensystem nach Anspruch 3, **dadurch gekennzeichnet, dass** der Kompressor (17) in der geschlossenen Einheit integriert ist.

5. Klimaanlagensystem nach einem der Ansprüche 2 bis 4, **dadurch gekennzeichnet, dass** ein Expansionsventil (37) zwischen dem inneren Wärmetauscher (19) und dem Verdampfer (22) angeordnet ist, um eine Verdampfung des Kühlmittels zu begünstigen.

6. Klimaanlagensystem nach Anspruch 5, **dadurch gekennzeichnet, dass** jeder der Wärmetauscher (8, 11) einen korrespondierenden Kreislauf (27, 32) zum Zirkulieren des korrespondierenden Zwischenfluids umfasst, wobei jeder der Zirkulationskreisläufe (27, 32) eine korrespondierende Zirkulationspumpe (31, 36) umfasst.

7. Klimaanlagensystem nach Anspruch 6, **dadurch gekennzeichnet, dass** der innere Wärmetauscher (19) Teil eines Kühlkreislaufes (23) ist, der den Kompressor (17), den Kondensator (21), ein Expansionsventil (37) und den Verdampfer (22) umfasst, die in Reihenfolge in dem Kühlkreislauf (23) angeordnet sind.

8. Klimaanlagensystem nach Anspruch 6 oder Anspruch 7, **dadurch gekennzeichnet, dass** jedes der Zwischenfluide ein Gemisch aus Wasser und Glycol ist.

9. Klimaanlagensystem nach Anspruch 6 oder Anspruch 7, **dadurch gekennzeichnet, dass** die Zwischenfluide einander gleich sind.

10. Klimaanlagensystem nach einem der vorhergehenden Ansprüche, **dadurch gekennzeichnet, dass** das Kühlmittel ein Fluid mit geringem globalen Erwärmungspotential ist.

11. Klimaanlagensystem nach Anspruch 10, **dadurch gekennzeichnet, dass** das Kühlmittel durch Kohlendioxid oder durch eine Flüssigkeit, zum Beispiel ein R152a Gas gebildet wird.

12. Klimaanlagensystem nach einem der vorhergehenden Ansprüche, **dadurch gekennzeichnet, dass** dieses ein Gebläse (9, 14) umfasst, das jedem der Wärmetauscher (8, 11) zur Erzeugung einer Luftzirkulation durch den zugehörigen Wärmetauscher (8, 11) hindurch zugeordnet ist.

13. Kraftfahrzeug mit einem Klimaanlagensystem nach einem der vorhergehenden Ansprüche.

## Revendications

1. Système de climatisation (7) pour un véhicule automobile comportant un habitacle (4) et un compartiment moteur (2), le système de climatisation (7) comprenant au moins un premier échangeur de chaleur (11) pour échanger de la chaleur entre l'air externe et un premier fluide intermédiaire, et au moins un deuxième échangeur de chaleur (8) pour échanger de la chaleur entre l'air dans ledit habitacle (4) et un deuxième fluide intermédiaire ; ledit système de climatisation (7) comprenant en outre un condenseur (21) dans lequel un fluide de refroidissement ajoute de la chaleur audit premier fluide intermédiaire, un évaporateur (22) dans lequel ledit fluide de refroidissement soustrait de la chaleur dudit deuxième fluide intermédiaire, et un échangeur de chaleur interne (19), conçu pour permettre un échange de chaleur entre le fluide de refroidissement sortant dudit évaporateur (22) et le fluide sortant dudit condenseur (21) ; ledit système de climatisation (7) étant **caractérisé en ce qu'**au moins ledit condenseur (21), ledit évaporateur (22), et ledit échangeur de chaleur interne (19) sont intégrés de manière à former un ensemble d'un seul tenant (16) conçu pour être logé dans ledit compartiment moteur (2).

2. Système de climatisation selon la revendication 1, **caractérisé en ce que** ledit fluide de refroidissement est maintenu en circulation entre ledit condenseur (21), ledit évaporateur (22), et ledit échangeur de chaleur interne (19), au moyen d'un compresseur (17), qui est également logé dans ledit compartiment moteur (2).

3. Système de climatisation selon la revendication 2, **caractérisé en ce que** ledit compresseur (17) est actionné par un moteur (3) du véhicule automobile par l'intermédiaire de moyens de transmission de mouvement.

4. Système de climatisation selon la revendication 3, **caractérisé en ce que** ledit compresseur (17) est intégré dans ledit ensemble d'un seul tenant.

5. Système de climatisation selon l'une quelconque des revendications 2 à 4, **caractérisé en ce qu'**une soupape de détente (37) est agencée entre ledit échangeur de chaleur interne (19) et ledit évaporateur (22) pour favoriser l'évaporation dudit fluide de refroidissement.

6. Système de climatisation selon la revendication 5, **caractérisé en ce que** chacun desdits échangeurs de chaleur (8, 11) comprend un circuit (27, 32) correspondant pour la circulation du fluide intermédiaire correspondant, chacun desdits circuits de circulation (27, 32) comprenant une pompe de circulation (31, 36) correspondante.

7. Système de climatisation selon la revendication 6, **caractérisé en ce que** ledit échangeur de chaleur interne (19) fait partie d'un circuit de refroidissement (23) comprenant ledit compresseur (17), ledit condenseur (21), une soupape de détente (37), et ledit évaporateur (22), qui sont agencés successivement dans ledit circuit de refroidissement (23).

8. Système de climatisation selon la revendications 6 ou la revendication 7, **caractérisé en ce que** chacun desdits fluides intermédiaires est un mélange d'eau et de glycol.

9. Système de climatisation selon la revendication 6 ou la revendication 7, **caractérisé en ce que** lesdits fluides intermédiaires sont identiques l'un à l'autre.

10. Système de climatisation selon l'une quelconque des revendications précédentes, **caractérisé en ce que** ledit fluide de refroidissement est un fluide avec un faible potentiel de réchauffement de la planète.

11. Système de climatisation selon la revendication 10, **caractérisé en ce que** ledit fluide de refroidissement est constitué de dioxyde de carbone ou d'un liquide, par exemple du gaz R152a.

12. Système de climatisation selon l'une quelconque des revendications précédentes, **caractérisé en ce qu'**il comprend un ventilateur (9,14) associé à chacun desdits échangeurs de chaleur (8, 11) pour la circulation de l'air à travers l'échangeur de chaleur (8, 11) associé.

13. Véhicule automobile comprenant un système de climatisation selon l'une quelconque des revendications précédentes.
